# EUROPEAN PATENT SPECIFICATION

(11) **EP 3 489 042 B1**
(45) Date of publication and mention of the grant of the patent: **13.01.2021**
(21) Application number: 18167691.7
(22) Date of filing: 17.04.2018
(51) Int. Cl.: B60C 19/08

(54) **PNEUMATIC TIRES**
LUFTREIFEN
PNEUMATIQUES

(30) Priority: 28.11.2017 KR 20170159916
(43) Date of publication of application: 29.05.2019
(73) Proprietor: Kumho Tire Co., Inc., Gwangju 62392 (KR)
(72) Inventor: PARK, Byung-Chul, Jeollanam-do 59703 (KR); LEE, Sang-Woo, Gyeonggi-do 16679 (KR); KIM, Chung-Soo, Gyeonggi-do 16445 (KR)
(74) Representative: Schweitzer, Klaus

(56) References cited:
- EP-A1- 3 088 215
- US-A1- 2007 144 644
- US-A1- 2013 056 128
- US-A1- 2017 197 480

## Description

### [RELATED APPLICATIONS]

This application claims priority to Korean Patent Application No. 10-2017-0159916, filed on November28, 2017 in the Korean Intellectual Property Office.

### [BACKGROUND OF THE INVENTION]

### 1. Field of the Invention

The present invention relates to a pneumatic tire, and more specifically, to a pneumatic tire which may improve electrical conductivity in the tire so as to prevent an accident caused by a generation of static electricity in an automobile.

### 2. Description of the Related Art

As is well known, there is a possibility that a fire may occur due to a static electricity of a driver during refueling an automobile.

To eliminate such a danger, antistatic touch pads to be used before refueling are installed in a gas station, but the automobile also needs a means capable of preventing the static electricity.

In order to discharge the static electricity from the automobile to a ground, it is also necessary for the tire to conduct an electricity, since the tire is a portion of the automobile that contacts with a road surface.

Conventionally, the tire is adapted to induce the electricity so as to be flown through a side rubber thereof. However, there is a limit to make the tire have electrical conductivity while maintaining adequate physical properties required for the side rubber.

Therefore, research into other rubbers and semi-finished products of the tire to conduct the electricity is continuously carried out in order to study other measures.

For example, Korean Patent Laid-Open Publication No. 2001-0096800, which was published on November 08, 2001, discloses a spray composition and a method to improve characteristics of discharging the static electricity in the tire, and Korean Patent Registration No. 10-0453201, which was registered on October 06, 2004, discloses an anti-static tire. In addition, US 2017/0197480 A1, US 2013/0056128 A1 and EP 3 088 215 A1 disclose pneumatic tires.

However, these patents still have lack of improvement in an antistatic performance of the tire.

### [SUMMARY OF THE INVENTION]

In consideration of the above-mentioned circumstances, it is an object of the present invention to provide a pneumatic tire which may improve electrical conductivity in the tire so as to prevent an accident caused by a generation of static electricity in an automobile.

In order to achieve the above-described object, according to the present invention, there is provided a pneumatic tire according to claim 1.

In addition, an electrically conductive coating layer may be formed on a surface of the air vent cord so as to have the electrical conductivity.

Further, the air vent cord may be made of at least one selected from a cotton cord, a nylon cord and a PET cord.

Further, the air vent cord may have a tensile load of 0.25 kg (kgf) or more, and the air vent cord may have a thickness within a range of 1530 to 4500 tex (170D to 500D (denier)).

Further, the liquid carbon may have dibutyl phthalate (DBP) within a range of 70 to 125 (cm'/100g).

Furthermore, the liquid carbon may include 50 to 60 % by weight of water, 37 to 43 % by weight of carbon black, and 1 to 5 % by weight of a surfactant.

According to the above-described pneumatic tire of the present invention, a part of electrically conductive coating layers among a plurality of air vent cords installed between the carcass ply and the belt layer is formed so as to electrically communicate the carcass ply and the belt layer with each other, such that a static electricity generated inside the automobile is discharged through the tread grounded to the road surface via the carcass ply which electrically contacts with the tire wheel, thereby preventing an accident that may occur due to the static electricity in the automobile.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a front partial cross-sectional view of a pneumatic tire according to an embodiment of the invention;
FIG. 2 is a partially enlarged cross-sectional view of a portion A in FIG. 1; and
FIG. 3 is a schematic view illustrating a process of forming a carbon coating layer on an air vent cord of the present invention.

### [DETAILED DESCRIPTION OF THE INVENTION]

Hereinafter, preferred embodiments of the present invention will be described in detail with reference to the accompanying drawings, so that persons having common knowledge in the technical field to which the present invention pertains may easily implement the invention. However, the present invention may be realized in various forms, and it is not limited to the embodiments described herein. In the drawings, publicly known functions and configurations that are judged to be able to make the purport of the present invention unnecessarily obscure will not be illustrated. Referring to the drawings, wherein like reference characters designate like or corresponding parts throughout the several views.

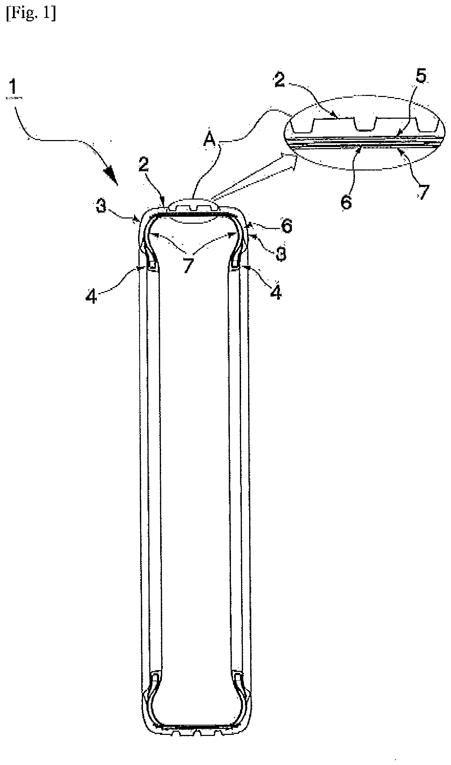

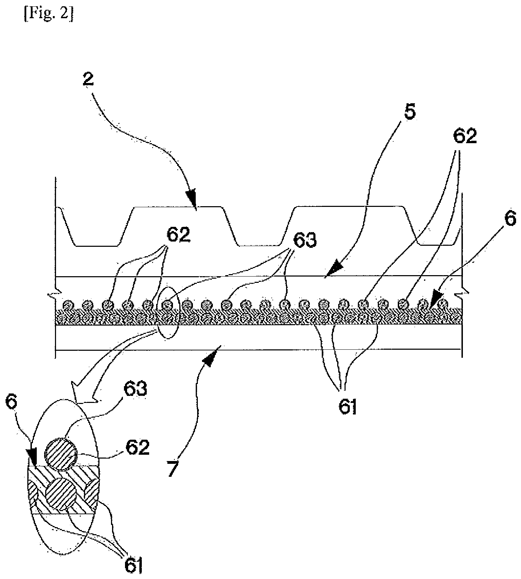

FIG. 1 is a front partial cross-sectional view of a pneumatic tire according to an embodiment of the invention, and FIG. 2 is a partially enlarged cross-sectional view of a portion A in FIG. 1.

Referring to FIGS. 1 and 2, a pneumatic tire 1 includes a tread portion 2 that contacts with a ground, sidewall portions 3 and bead portions 4, which are sequentially located to the tread portion 2 symmetrically with each other in both width directions.

In addition, an inner liner 7 and a carcass ply 6 are laminated in the order named on an inside of the tread portion 2, the sidewall portions 3 and the bead portions 4. In particular, a belt layer 5 is laminated on an upper side of the carcass ply 6 in the tread portion 2.

The carcass ply 6 includes a plurality of fabric cords 61 radially arranged therein in the width direction of the pneumatic tire 1, which are configured so as to be arranged at a predetermined interval between the individual cords in a circumferential direction.

Further, a plurality of air vent cords 62 are installed between the carcass ply 6 and the belt layer 5, which are configured so as to be arranged radially at a predetermined interval similar to the above-described fabric cord 61.

Herein, the air vent cords 62 play a role of passages that allow an air, which is present between the carcass ply 6 and the belt layer 5 during winding and attaching a belt semi-product for forming the belt layer 5 on the upper side of the carcass ply 6, then pressing and fixing the same in a process of forming the tire, to be discharged to an outside.

The present invention is characterized in that at least one or more selected from the plurality of air vent cords 62 is formed so as to have electrical conductivity, so that the carcass ply 6 and the belt layer 5 are electrically communicated with each other.

As described above, a part of the air vent cords 62 are formed so as to have the electrical conductivity, so that a current flowing to the carcass ply 6 may flow to the belt layer 5, thereby preventing a generation of static electricity in the automobile.

Meanwhile, in the pneumatic tire 1 of the present invention, an electrically conductive coating layer is formed on a surface of the air vent cord 62, so that a part of the air vent cords 62 has the electrical conductivity, thereby allowing the static electricity generated in the automobile to be discharged to the ground through the pneumatic tire 1.

In the present embodiment, the electroconductive coating layer is exemplified by a carbon coating layer 63 formed by coating the surface of the air vent cord 62 with liquid carbon.

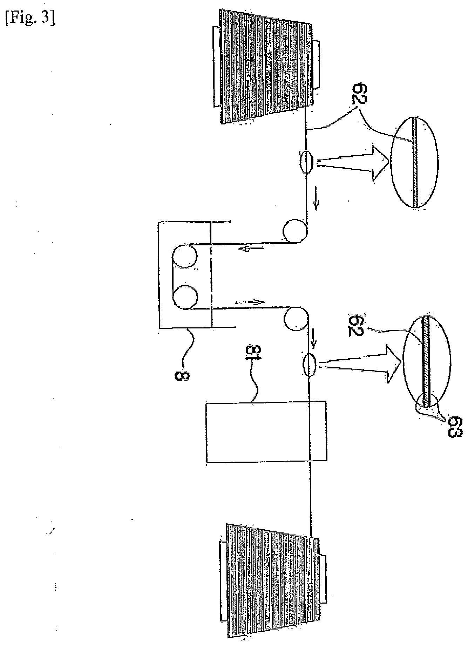

FIG. 3 is a schematic view illustrating a process of forming the carbon coating layer on the air vent cord of the present invention.

The process of forming the carbon coating layer 63 will be described with reference to FIG. 3. First, the air vent cord 62 is dipped in liquid carbon contained in a vessel 8, and then the air vent cord 62 is dried by using a dryer 81, so that the carbon coating layer 63 is uniformly coated on an outer circumference of the air vent cord 62 at a predetermined thickness.

In the present embodiment, an example of the air vent cord 62 made of a nylon cord is exemplified, but the present invention is not necessarily limited thereto. Of course, the air vent cord 62 may be made of at least one or more selected from a cotton cord, a nylon cord, and a polyethylene terephthalate (PET) cord.

At this time, it is preferable that the air vent cord 62 has a tensile load of at least 0.25 kg (kgf) or more, and a thickness within a range of 1530 to 4500 tex (170D to 500D (denier)).

The tensile Load is the ability of a material to withstand a pulling force. It is customarily measured in units of force per cross-sectional area. And the tensile load is determined according to "ASTM D885.15"

Denier is a unite of cord's thickness, it doesn't have any measurement standards to determine Denier. Denier is measured with a weight of 9000m cord, thus "1D(denier)" means 1g/9000m of cord.

Next, an operation of a rolling process of the carcass ply 6 is carried out in such a way that a fabric rolled in a sheet shape is topped with upper and lower rubbers while unwinding the fabric, and then the air vent cord 62 is placed thereon using an adhesive force of the rubbers, followed by pulling the same.

Therefore, when the tensile load of the air vent cord 62 is less than 0.25 kg (kgf), the air vent cord 62 is broken due to a tensile force generated in the above-described rolling process. As a result, an air trapped between the semi-finished products is not discharged to the outside due to the broken air vent cord 62 during forming and pressing the semi-finished product, thereby causing a phenomenon in which the air is introduced therebetween. Otherwise, the carcass ply 6 and the belt layer 5 are not electrically communicated with each other, and thereby an effect of preventing the static electricity through discharge thereof may not be expected.

In addition, when the thickness of the air vent cord 62 is less than 1530 tex (170D (denier)), there is a problem that the cord is too thin and weak, thus to be easily broken. On the other hand, when the thickness of the cord exceeds 4500 tex (500D (denier)), even if preparing a solution of carbon and applying to the cord, the carbon is not uniformly and sufficiently applied, such that the possibility of occurring a large deviation in the electrical conductivity is increased.

Hereinafter, experimental results performed on the air vent cord having the carbon coating layer formed thereon will be described with reference to Tables 1 to 6 below.

Table 1 illustrates results of an experiment performed on the air vent cords 62 in which the carbon coating layer is formed on a nylon cord having the carbon coating layer formed thereon according to the embodiment of the present invention, in order to evaluate the electrical conductivity in each thickness thereof and whether these air vent cords can be applied thereto (hereinafter, briefly referred to as an applicability of air vent cord).

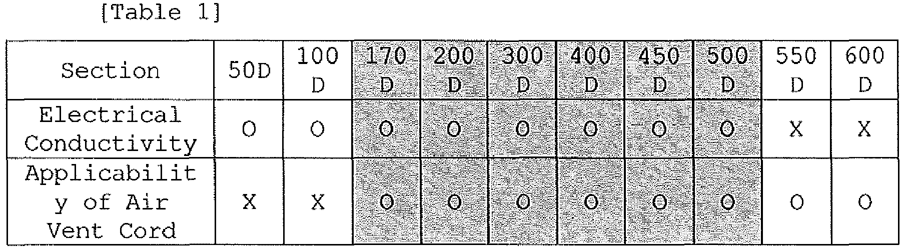

As shown in Table 1, since the tensile load of the air vent cords 62 having a thickness of 450 tex (50D) and 900 tex (100D) which is less than 1530 tex (170D) are less than 0.25 kg (kgf), respectively, the air vent cords 62 cannot withstand the tensile force generated in the above-described rolling process of the carcass ply 6. Therefore, permeability for preventing the above-described air introduction and the electrical conductivity for preventing the static electricity cannot be expected through the air vent cords 62, and thereby these cords cannot be applied as the air vent cord 62.

In addition, the air vent cords 62 are dipped in liquid carbon solution, and then dried. When the liquid carbon solution is dried, a droplet is formed thereon by surface tension. At this time, provided that the denier increases and the thickness becomes thick, the droplet is formed as the liquid carbon solution is dried, which renders carbon not to be uniformly applied to the surfaces of the air vent cords 62 and the conductivity to be lowered. Accordingly, in a case of the air vent cords 62 having a thickness of 4950 tex (550D) and 5400 tex (600D) which exceeds 4500 tex (500D), carbon is not uniformly applied to the surfaces of the air vent cords 62, such that there is a deviation in the electrical conductivity. Therefore, these cords cannot be applied as the air vent cord 62 because they do not have the electrical conductivity sufficient to prevent the static electricity.

Accordingly, it is preferable to select and use types of the above-described carbon coating layers by adjusting a carbon black grade according to a diameter thereof, so that the air vent cord 62 has the electrical conductivity sufficient to prevent the static electricity.

As shown in Table 2 below, the carbon black grade of the carbon coating layer may be determined based on an N₂ surface area (N₂SA) and dibutyl phthalate (DBP) of liquid carbon.

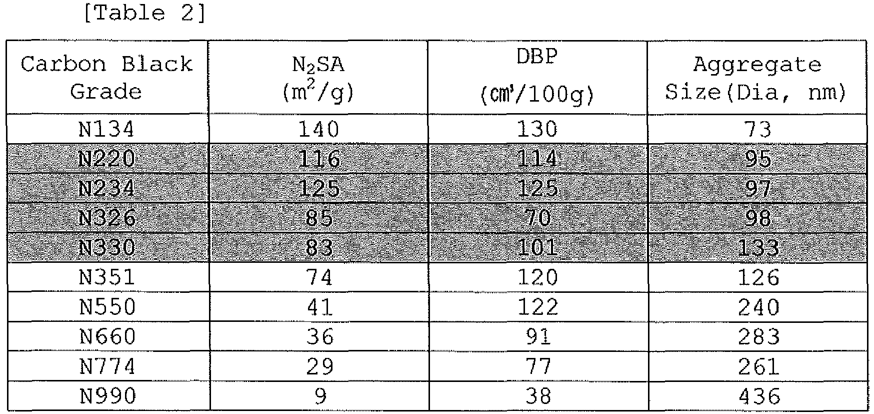

"Liquid carbon" means a suspension of carbon black in an aqueous solution, containing water and eventually additives, like surfactants.

N₂ surface area (N₂SA) is determined according to ASTM D 6556-10, and dibutyl phthalate(DBP)is determined according to ISO 4656-1, ASTM D 2414 or ASTM D 3493.

As shown in Table 2, as a range of the carbon black applied to the air vent cords 62 with thicknesses of 1530 tex (170D) to 4500 tex (500D) having the nylon cord applied thereto, it is possible to select carbon black grades of N220, N234, N326 and N330 whose aggregate size(Dia, nm) is in a range of 95 to 133 nm. In such a way, it is possible to manufacture the carbon coating layer 63 required for the air vent cord.

The aggregate size is the aggregation diameter(nm) of carbon particles that can have carbon properties. The aggregate size is measured by the degree to which the adsorbed drug / gas adsorbs to the surface of the substance. Aggregate size measurement method is nitrogen adsorption method (ASTM D6556) .

Therefore, in order for the carbon coating layer 63 to contain the carbon black having the above-described grade, it is preferable to select and use the liquid carbon for forming the carbon coating layer 63 within a range of 83 m²/g to 125 m²/g in terms of the N₂ surface area (N₂SA), and within a range of 70 (cm³/100g) to 125 (cm³/100g) in terms of the dibutyl phthalate (DBP).

As used herein, the N₂SA represents a surface area of carbon black in which N₂ molecules may be adsorbed thereto. When the N₂SA is low, it means that the surface area of the carbon black is small and a minimum particle size of the carbon that can be broken is large. When the N₂SA is high, it means that the surface area of the carbon black is large, and the minimum particle size of the carbon that can be broken is small.

Therefore, when the N₂SA is less than 83 m²/g, the minimum particle size of the carbon is too large, such that a phenomenon, in which the carbon black is separated from the cord even if applying it to the air vent cord 62 (in which the carbon particles are blown off), occurs. Thereby, the electrical conductivity of the air vent cord 62 having the carbon coating layer 63 formed thereon is too low.

Also, when the N₂SA exceeds 125 m²/g, aggregation between the carbon particles is strong and they are not dispersed well, such that a deviation occurs in the electrical conductivity value of the air vent cord 62 having the carbon coating layer 63 formed thereon.

Table 3 below illustrates experimental results of evaluating the electrical conductivity of the liquid carbon for forming the carbon coating layer 63 according to the N₂SA thereof, and the applicability of these air vent cords 62.

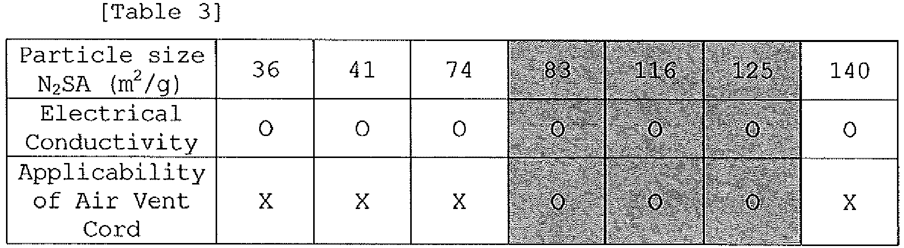

As shown in Table 3, while the carbon black has the electrical conductivity in all the ranges of 36 m²/g to 140 m²/g in terms of the N₂SA, in a case of 36 m²/g, 41 m²/g, and 74 m²/g in which the N₂SA is less than 83 m²/g, it is not possible to apply to the air vent cord because each electrical conductivity thereof is too low. In addition, in a case of 140 m²/g in which the N₂SA exceeds 125 m²/g, a large deviation occurs in the electrical conductivity value, such that it is not possible to apply to the air vent cord.

As used herein, the dibutyl phthalate (DBP) represents a degree of development in a structure of the minimum particle size of the carbon, and means that the larger the value, the more developed the particle size of the carbon.

Therefore, as the development in the structure thereof is increased, the oil absorption between the particles is increased, and the electrical resistance is lowered, thereby allowing the electricity to be conducted well.

When the DBP is less than 70 (cm³/100g), the carbon particle size of the carbon becomes very large (an N990 carbon black grade), and the electrical conductivity of the formed carbon coating layer is lowered due to the phenomenon in which the carbon particles are blown off at the time of application. When the DBP exceeds 125 (cm³/100g), a specific surface area of the carbon black is very high due to the above-described N134 carbon black grade, such that the aggregation between the carbon particles becomes strong and they are not dispersed well.

Table 4 below illustrates experimental results of evaluating the electrical conductivity of the liquid carbon for forming the carbon coating layer 63 according to the DBP thereof, and the electrical resistance of the air vent cords 62 having the carbon coating layer formed thereon according to the DBP thereof.

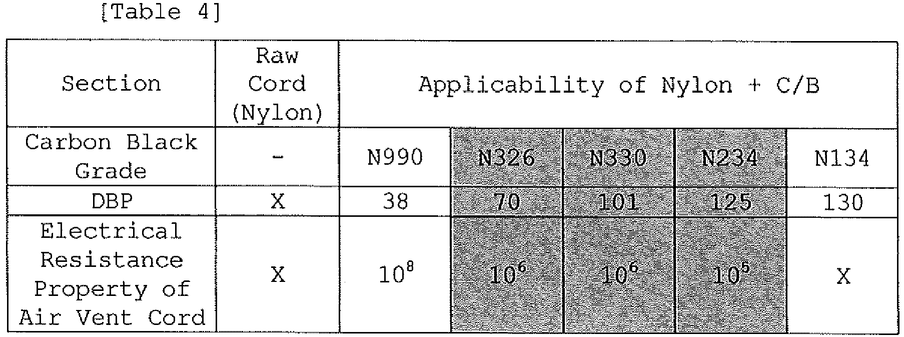

As shown in Table 4, in a case of the N990 carbon black grade having a DBP of less than 70 (cm³/100g), the carbon particles become large, and thereby the electrical resistance of the formed carbon coating layer is increased due to the phenomenon in which the carbon particles are blown off at the time of application. Therefore, it is meaningless to apply it to the air vent cord 62 because the carbon coating layer cannot have the electrical conductivity required to discharge the static electricity.

Further, in a case of an N134 carbon black grade having a DBP exceeding 125 (cm³/100g), the specific surface area of carbon black according to the above-mentioned N₂SA is very high, such that the aggregation between the carbon particles becomes strong and they are not dispersed well. Therefore, it is not possible to apply it to the air vent cord.

Thus, in carbon black grades of N326, N330, and N234 whose dibutyl phthalate (DBP) is in a range of 70 to 125 (cm³/100g), it is necessary for the air vent cord to have an electrical resistance of less than 10⁸, in order for the air vent cord to have the electrical conductivity required to discharge the static electricity.

On the other hand, the liquid carbon for forming the carbon coating layer 63 may include components in a ratio of 50 to 60% by weight of water, 37 to 43 % by weight of carbon black, and 1 to 5 % by weight of a surfactant (3 to 7 % by weight in a case of other additives including the surfactant).

When the content of the carbon black exceeds 43 % by weight, the liquid carbon for forming the carbon coating layer is too viscous, causing a phenomenon in which the carbon particles become lumpy. As a result, the nylon cord (raw cord) included in the air vent cord 62 cannot be coated with the carbon.

If the content of the water exceeds 60 % by weight and the content of the surfactant exceeds 5 % by weight (7 % by weight in the case of other additives including the surfactant), the carbon black becomes too thin at 37 % by weight or less. Therefore, it is meaningless to use the carbon for coating due to the significantly lowered electrical conductivity.

Therefore, since the above-described pneumatic tire 1 of the present invention is driven in a state of being grounded on the road surface during an operation of the automobile, the static electricity generated from a body of the automobile is discharged to the road surface through the carcass ply 6 which electrically contacts with the tire wheel and the plurality of air vent cords 62 having the carbon coating layer 63 formed thereon, and thereby it is possible to prevent the static electricity from being generated in the body of the automobile.

Commonly, when it is determined that there is a difference in the electrical resistance in the tire industry, it is determined that there is a difference in the electrical resistance only if it is changed by an order of magnitude (for example, from 10⁸ to 10⁷).

Table 5 below illustrates experimental results of evaluating an electrical resistance index of the air vent cord 62 applied with a carbon coating layer according to a change in the thickness (denier) of the air vent cords 62 having the carbon coating layer formed thereon.

**[Table 5]**

| Section | 170D | 200D | 300D | 400D | 500D |
|---|---|---|---|---|---|
| Electrical Resistance Index (10^Ω) | 6-7 | 5-6 | 5-6 | 4-5 | 4-5 |

Herein, an experiment was performed for evaluating the electrical resistance index by applying the air vent cord 62 in which a carbon coating layer 63 of a carbon black grade N330 (N₂SA 83, and DBP 101) is formed on a nylon cord material.

The electrical resistance index means the number of digits for an integer × 10^ (e.g., 5.1 x 10^5). The front integer is omitted because it is determined to be a measurement deviation. For example, 5.1 × 10^5 and 5.9 × 10^5 may be determined to have similar electrical resistances to each other on the tire.

In general, a conventional tire applied with the nylon raw cord has an electrical resistance index of about 8. Therefore, it is confirmed that the air vent cord 62 has the electrical conductivity sufficient to prevent the static electricity, because all the air vent cords 62 with the thicknesses of 1530 to 4500 tex (170D to 500D) have electrical resistance indexes within a range of 4 to 7, which is less than 8.

Table 6 below illustrates experimental results of evaluating the electrical resistance indexes of the pneumatic tires to which various types of air vent cords 62 are applied.

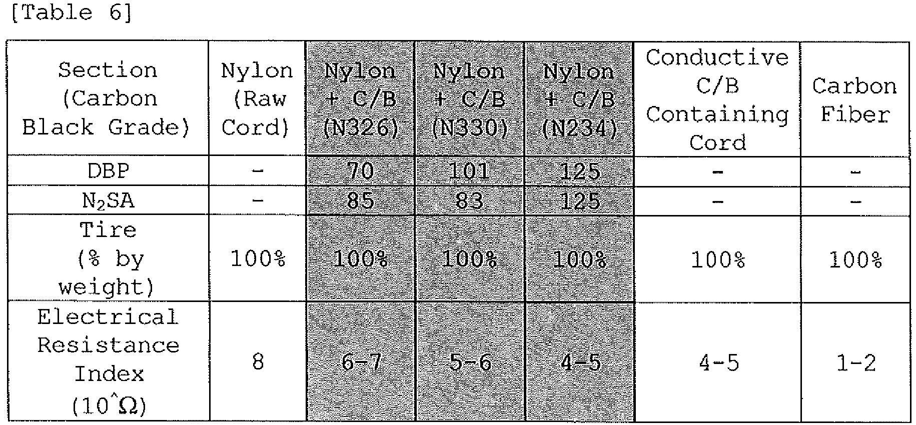

Specifically, Table 6 illustrates the experimental results of evaluating the electrical resistance indexes of the pneumatic tires 1 to which the nylon raw cord, nylon cords having the carbon coating layers formed thereon in each carbon grade (N326, N330 and N234), a conductive carbon black (C/B) containing cord, and a carbon fiber were applied, respectively, while all the applied air vent cords 62 have the same unified thickness of 1800 tex (200D) as each other.

As described above, the electrical resistance index is represented by an integer × 10^ (e.g., 5.1 × 10^5), and the front integer is omitted because it is determined to be a measurement deviation.

Herein, it can be confirmed that, since all the pneumatic tires 1 to which the nylon cords (N326, N330 and N234) having the carbon coating layer formed thereon, the conductive carbon black (C/B) containing cord, and carbon fiber except for the nylon raw cord have electrical resistance indexes within a range of 1 to 7, which is less than 8, these tires have the electrical conductivity sufficient to prevent the static electricity.

In general, the tire applied with the nylon raw cord has an electrical resistance index of about 8. Therefore, the lower than 8 the electrical resistance index, the better the effect of preventing the static electricity. However, in the case of the conductive carbon black (C/B) containing cord and the carbon fiber, the price is too high for using in the general pneumatic tire 1, such that the pneumatic tire applied therewith were excluded from the applicability evaluation. Since the price of the above two materials is 100 times higher than the general nylon cord, there is a significant difference in the price therebetween.

Therefore, by applying the air vent cord 62 having the carbon coating layer 63 formed thereon instead of the conductive carbon black (C/B) containing cord and the carbon fiber, it is possible to increase the versatility so as to reduce manufacturing costs of the tire.

As described above, according to the present embodiment, a part of electrically conductive coating layers among the plurality of air vent cords installed between the carcass ply 6 and the belt layer 5 is formed so as to electrically communicate the carcass ply 6 and the belt layer 5 with each other, such that the static electricity generated inside the automobile is discharged through the tread grounded to the road surface via the carcass ply 6 which electrically contacts with the tire wheel, thereby preventing an accident that may occur due to the static electricity in the automobile.

### [Description of Reference Numerals]

1: Radial tire, 2: Tread
3: Sidewall, 4: Bead
5: Belt layer, 6: Carcass ply
7: Inner liner, 8: Vessel
61: Fabric cord, 62: Air vent cord
63: Carbon coating layer, 81: Dryer

## Claims

1. A pneumatic tire (1) comprising:
a belt layer (5) laminated and formed on an upper side of a carcass ply (6) inside a tread portion (2); and
a plurality of air vent cords (62) arranged between the carcass ply (6) and the belt (5) with a predetermined interval,
wherein at least a part of the air vent cords (62) is formed so as to have electrical conductivity, thus to electrically communicate the carcass ply (6) and the belt layer (5) with each other, **characterized in that**
an electrically conductive coating layer (63) is formed on the surface of the air vent cords (62) so as to have the electrical conductivity,
wherein the electrically conductive coating layer (63) includes a carbon coating layer formed by coating the surface of the air vent cords (62) with liquid carbon, and
wherein the liquid carbon has an N₂ surface area (N₂SA) within the range of 83 to 125 (m²/g).

2. The pneumatic tire (1) according to claim 1, wherein the air vent cord (62) is made of at least one selected from a cotton cord, a nylon cord and a PET cord.

3. The pneumatic tire (1) according to claim 2, wherein the air vent cord (62) has a tensile load of 0.25 kg (kgf) or more.

4. The pneumatic tire (1) according to claim 3, wherein the air vent cord (62) has a thickness within the range of 1530 to 4500 tex (170D to 500D (denier)).

5. The pneumatic tire (1) according to claim 1, wherein the liquid carbon has dibutyl phthalate (DBP) within the range of 70 to 125 (cm³/100g).

6. The pneumatic tire (1) according to claim 1, wherein the liquid carbon includes 50 to 60 % by weight of water, 37 to 43 % by weight of carbon black, and 1 to 5 % by weight of a surfactant.

## Patentansprüche

1. Luftreifen (1), Folgendes umfassend:
eine Gürtelschicht (5), die auf einer oberen Seite einer Karkassenlage (6) innerhalb eines Profilabschnitts (2) laminiert und ausgebildet ist; und
mehrere Entlüftungskorde (62), die zwischen der Karkassenlage (6) und dem Gürtel (5) in einem vorbestimmten Intervall angeordnet sind,
wobei mindestens ein Teil der Entlüftungskorde (62) so ausgebildet ist, dass er eine elektrische Leitfähigkeit aufweist, um folglich die Karkassenlage (6) und die Gürtelschicht (5) elektrisch miteinander zu verbinden, **dadurch gekennzeichnet, dass**
eine elektrisch leitfähige Überzugsschicht (63) auf der Oberfläche der Entlüftungskorde (62) ausgebildet ist, um so die elektrische Leitfähigkeit aufzuweisen,
wobei die elektrisch leitfähige Überzugsschicht (63) eine Kohlenstoff-Überzugsschicht umfasst, die durch Überziehen der Oberfläche der Entlüftungskorde (62) mit flüssigem Kohlenstoff ausgebildet wird, und
wobei der flüssige Kohlenstoff einen N₂-Oberflächenbereich (N₂SA) innerhalb des Bereichs von 83 bis 125 (m²/g) aufweist.

2. Luftreifen (1) nach Anspruch 1, wobei der Entlüftungskord (62) aus mindestens einem Element angefertigt ist, das aus einem Baumwollkord, einem Nylon-Kord und einem PET-Kord ausgewählt ist.

3. Luftreifen (1) nach Anspruch 2, wobei der Entlüftungskord (62) eine Zugfestigkeit von 0,25 kg (kgf) oder mehr aufweist.

4. Luftreifen (1) nach Anspruch 3, wobei der Entlüftungskord (62) eine Dicke innerhalb des Bereichs von 1530 bis 4500 tex (170 D bis 500 D (Denier)) aufweist.

5. Luftreifen (1) nach Anspruch 1, wobei der flüssige Kohlenstoff Dibutylphthalat (DBP) innerhalb des Bereichs von 70 bis 125 (cm³/100 g) aufweist.

6. Luftreifen (1) nach Anspruch 1, wobei der flüssige Kohlenstoff 50 bis 60 Masse-% Wasser, 37 bis 43 Masse-% Kohlenstoff-Schwarz und 1 bis 5 Masse-% einer oberflächenaktiven Substanz umfasst.

## Revendications

1. Pneu (1) comprenant :
une couche de courroie (5) laminée et formée sur un côté supérieur d'un pli de carcasse (6) à l'intérieur d'une partie de bande de roulement (2) ; et
une pluralité de cordons de ventilation (62) agencés entre le pli de carcasse (6) et la courroie (5) avec un intervalle prédéterminé,
dans lequel au moins une partie des cordons de ventilation (62) est formée de manière à présenter une conductivité électrique, donc pour communiquer électriquement le pli de carcasse (6) et la couche de courroie (5) l'un avec l'autre, **caractérisé en ce qu'**
une couche de revêtement électriquement conducteur (63) est formée sur la surface des cordons de ventilation (62) afin de présenter la conductivité électrique,
dans lequel la couche de revêtement électriquement conducteur (63) inclut une couche de revêtement de carbone formée par le revêtement de la surface des cordons de ventilation (62) avec du carbone liquide, et
dans lequel le carbone liquide présente une surface N₂ (N₂SA) au sein de la plage de 83 à 125 (m²/g).

2. Pneu (1) selon la revendication 1, dans lequel le cordon de ventilation (62) est constitué d'au moins un choisi parmi un cordon de coton, un cordon de nylon et un cordon en PET.

3. Pneu (1) selon la revendication 2, dans lequel le cordon de ventilation (62) présente une charge de traction de 0,25 kg (kgf) ou plus.

4. Pneu (1) selon la revendication 3, dans lequel le cordon de ventilation (62) présente une épaisseur au sein de la plage de 1530 à 4 500 tex (170 D à 500 D (denier)).

5. Pneu (1) selon la revendication 1, dans lequel le carbone liquide présente du phtalate de dibutyle (DBP) au sein de la plage de 70 à 125 (cm³/100 g).

6. Pneu (1) selon la revendication 1, dans lequel le carbone liquide inclut 50 à 60% en poids d'eau, 37 à 43 % en poids de noir de carbone et 1 à 5 % en poids d'un tensioactif.
